# EUROPEAN PATENT SPECIFICATION

(11) **EP 0 947 450 B1**
(45) Date of publication and mention of the grant of the patent: **16.07.2003**
(21) Application number: 98200991.2
(22) Date of filing: 30.03.1998
(51) Int. Cl.: B65G 17/08

(54) **Modular conveyor belt and linking pin therefor**
Modulares Förderband und Gelenkstift dafür
Courroie de transport modulaire et goupille de charnière pour celle-ci

(43) Date of publication of application: 06.10.1999
(73) Proprietor: MCC Nederland B.V., NL-2691 GV 's-Gravenzande (NL)
(72) Inventor: van Esch, Franciscus Josephus Maria, 4823LA Breda (NL); van Zijderveld, George Johannes, 2691 CN 's-Gravenzande (NL)
(74) Representative: Smulders, Theodorus A.H.J., Ir.

(56) References cited:
- NL-C- 1 003 929
- US-A- 4 123 947
- US-A- 5 310 046

## Description

The invention relates to a modular conveyor belt, comprising a transport surface defined by a number of modules that are aligned in a direction of transportation and that extend transversely with respect to said direction, which modules are each provided with at least one outwardly extending knuckle on a leading and a trailing portion thereof, in which modular conveyor belt the knuckles of consecutive modules are pivotally linked by means of linking pins extending through said knuckles (see for example NL-C-1003929).

Modular conveyor belts are used in numerous environments for transporting all kinds of products. Within the conveyor belt, the linking pins transmit the driving force exerted on the conveyor belt from one module to another. The linking pins should therefore be highly resistant to shear- and bending forces. Because the forces exerted on the linking pins are generally of a dynamical nature, it is preferred that the linking pins be made of a tough material. Flexibility of the linking pins also reduces the chance of permanent deformation of the linking pin, which in turn reduces the chance of local wear of the conveyor belt due to a bend in a linking pin. Furthermore, because of the friction generated by the movement of the modules during use of the conveyor belt, the linking pins should be highly wear-resistant. In addition to this, the linking pins should be light weight to increase the load of the products that can be transported by the modular conveyor belt. Due to the relatively low strength of plastic material, this requirement is especially important for modular conveyor belts comprising plastic modules. Another important requirement is that the linking pins are cheap to manufacture.

In practice, it has been a problem to provide a modular conveyor belt with a linking pin that meets the above-mentioned requirements in full. The magnitude of this problem is illustrated by the fact that for assembling a conveyor belt in which the modules have a pitch of % inch, close to 80 linking pins are needed per running metre.

It is known to provide modular conveyor belts with linking pins made of metal. However, the disadvantage of metal linking pins is that they are relatively heavy and that permanent deformation of the linking pin is relatively easy. The latter greatly increases the chance of local wear of the conveyor belt due to a bent linking pin.

It is also known to provide modular conveyor belts with linking pins made of plastic. However, such plastic linking pins have the disadvantage that they are generally not tough enough to withstand the high shear- and bending forces. In practice, the diameter of a plastic linking pin is chosen relatively large, which leads to undesired constraints in the design of the modules, e.g. a larger minimal pitch of the modules in transport direction and/or a larger minimal thickness.

It is an object of the invention to overcome the above-mentioned problems and to provide a modular conveyor belt of which the linking pins are tough and flexible, lightweight and cheap to manufacture.

According to the invention, this objective is achieved by providing a modular conveyor belt in which at least one of said linking pins comprises reinforcing fibres extending at least substantially along the length of said linking pin, which reinforcing fibres are located in an inner portion of said linking pin, which inner portion is surrounded by a wear-resistant outer layer, covering said reinforcing fibres. Thus, a wear-resistant linking pin is provided that is highly resistant to shear- and bending forces and that is still flexible. Furthermore, fibres of an abrasive material can be used for reinforcement that would, upon direct contact, accelerate wear of the knuckles. This is of particular relevance when the conveyor belt comprises plastic modules.

In addition to this, the friction between the linking pin and the knuckle is prevented from causing the outermost fibres to be broken and/or to be separated from a support structure. Thus, the wear-resistant layer can also shield the knuckles from increased friction/abrasion caused by the fibres and/or the support structure.

It should be noted that profiles comprising reinforcing fibres located in an inner portion that is surrounded by an wear-resistant outer layer are known per-se. However, up to now the function outer layer has been used to protect the inner portion of the profile from outside influences e.g. sunlight. The invention is based on the insight that such a layer can be used effectively for a linking pin to protect the knuckles of the modules of a modular conveyor belt against abrasive influences from the reinforcing fibres and/or the support structure in which they are embedded.

In yet another embodiment, a modular conveyor belt according to the invention is characterised in that said reinforcing fibres comprise glass fibres. Thus, it is possible to use reinforcing fibres that have excellent material properties and that are of low cost, while their abrasive properties cannot damage the knuckles.

In another embodiment, a modular conveyor belt according to the invention is characterised in that the material of said inner portion is integrated with the material of said outer portion. This way, an outer layer is provided which is highly resistant to wear, while the radial dimension, i.e. the thickness of the outer layer, can be relatively small compared with the diameter of the linking pin. This makes it possible to provide tough linking pins of a relatively small diameter. A known commercial process for manufacturing such linking pins is described hereafter with reference to a preferred embodiment of the linking pin. Furthermore, such integration can serve to improve the wear-resistance of the connection between the outer layer and the inner portion.

Further features of preferred embodiments of a modular conveyor belt according to the invention are described in the dependent claims. The invention further relates to a linking pin.

The modular conveyor belt and the linking pin according to the invention will be elucidated with reference to an accompanying drawing of a preferred embodiment. In the drawing:
Fig. 1 is an isometric view of a part of a modular conveyor belt according to the invention;
Fig. 2 is an enlarged detail of a linking pin of the modular conveyor belt of Fig. 1; and
Fig. 3 is a schematic diagram of a preferred process for manufacturing the linking pin of Fig. 2.

The drawing only serves as a schematical representation of a preferred embodiment to elucidate the modular conveyor belt with the linking pin according to the invention. In the drawing, identical or similar parts are provided with corresponding reference numerals.

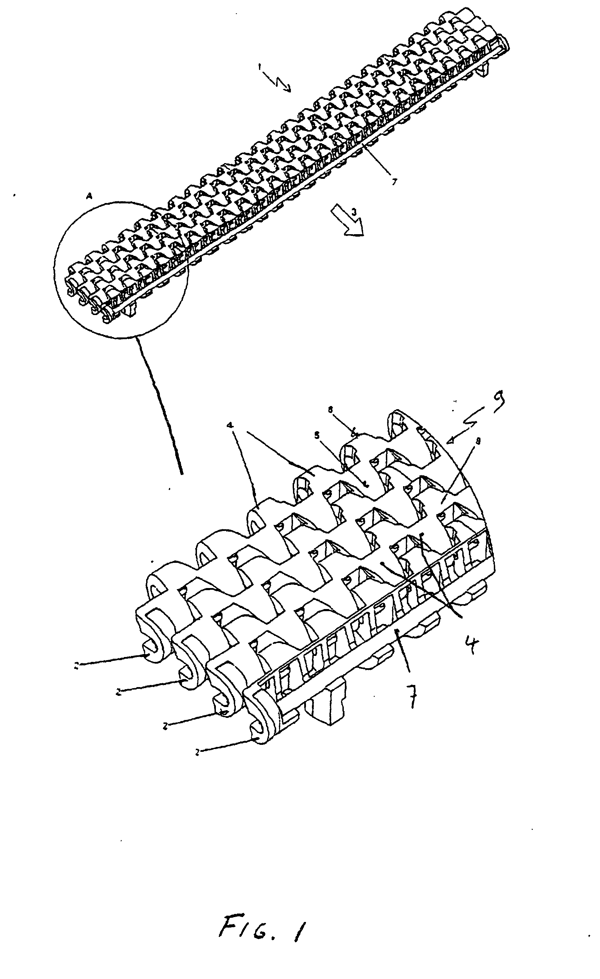

Fig. 1 shows a part of a modular conveyor belt 1. The modular conveyor belt 1 comprises a number of plastic modules 2 aligned in a direction of transportation 3. Each module 2 extends transversely with respect to the direction of transportation 3. Each module 2 is provided with a number of outwardly extending knuckles 4 on its leading portion 5 and its trailing portion 6. The knuckles 4 of consecutive modules 2 are pivotally linked by means of linking pins 7 extending through the knuckles 4. The modules 2 each comprise a top portion 8 which, top portions together define a transport surface 9 for transporting products. The modular conveyor belt 1 can e.g. be used in an endless loop for transporting products between two return wheels.

The modular conveyor belt 1 of fig. 1 is built up of one row of modules 2 aligned in a direction of transportation 3. However, a modular conveyor belt 1 according to the invention can also be formed of a number of parallel rows of modules 2 aligned in the direction of transportation 3, or a number of parallel rows of modules aligned in the direction of transportation 3, which rows intermesh according to a brick-like pattern. Furthermore, the size and the shape of the modules 2 can vary. The modules 2 can e.g. form a chain-like conveyor. The linking pin also can be used for plastics chain conveyors. The transport surface 9 may be open, e.g. when the modules 2 comprise lamellas or holes in their top portions 8. Furthermore, the top portion 8 can also comprise a curved surface for supporting products or may be provided with wings for supporting products, with division plates or with containers.

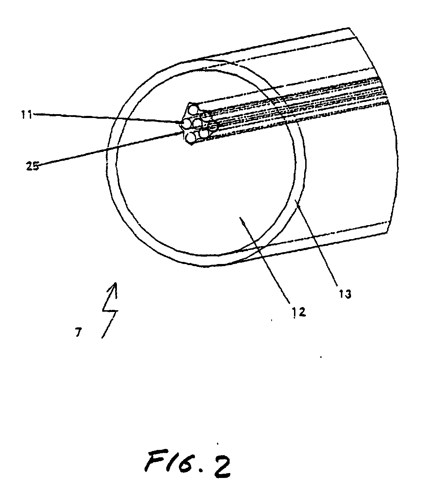

Referring to fig. 2, the linking pin 7 comprises reinforcing fibres 11 extending at least substantially along the length of the linking pin 7. Only a few fibres 11 are shown on an enlarged scale. It will be clear that in reality, the linking pin 7 comprises a large number of fibres 11. The long fibres 11 enable reinforcement of the linking pin 7 without impeding flexibility of the linking pin 7. The reinforcing fibres 11 preferably extend parallel along the length of the linking pin 7. However, it should be noted that, without departing from the inventive concept, the fibres 11 can also overlap each other in a zigzag pattern and/or be bundled into strands or into a roving.

The reinforcing fibres 11 are located in an inner portion 12 of the linking pin 7 which is surrounded by a wear-resistant outer layer 13, covering the reinforcing fibres 7. According to the invention, the wear-resistant outer layer 13 of the linking pin 7 protects the knuckles 4 of the modules 2 during use of the conveyor belt 1 against the abrasive fibres 11 and/or their support structure 25. This is especially important when the conveyor belt moves along an endless path and each module is repeatedly subjected to pivoting movement at the location of the return wheels. The wear-resistant outer layer 13 is preferably a skin formed from a synthetic material. As will be described later, a resin-impregnated polyester outer layer has proven to be particularly wear-resistant.

The reinforcing fibres 11 are preferably made of glass but can also be made of other materials, e.g. aramid, carbon, polythene. Also, combinations of fibres 11 of different materials are possible.

The inner portion 12 may comprise a support structure 25 in which the fibres 11 are embedded or bonded, preferably a vinylester support structure 25. Other materials that may be used as a support structure 25 comprise polyester, epoxy and other types of resins. The support structure 25 in which the fibres 11 are embedded preferably comprises 60% glass fibres. Depending on the type of fibres 11 used and the desired flexibility of the linking pin 7, the percentage of fibres 11 within the support structure 25 may be chosen differently.

The linking pin 7 is preferably shaped as a rod with a constant circular cross section. However, other shapes are possible, e.g. linking pins 7 of which the cross section varies in shape and/or dimension along their length. In particular, it is envisaged to provide linking pins 7 with oval, triangular, rectangular or polygonal cross sections and/or linking pins 7 of which the cross section varies along their length.

The diameter of the linking pin according to the invention can be chosen relatively small, e.g. 4 mm. This makes it possible to provide a tough conveyor belt of which the modules have a pitch of only 12,7 mm (½ inch). Although a diameter of 4 mm is to be preferred for many practical uses, the diameter of the linking pin can also be chosen larger, up to 10 or 15 mm. The radial dimension of the outer layer is preferably 0.2 mm, but can also be chosen larger. The length of the linking pin 7 may range between a minimum of 30 mm - 300 mm and a maximum of 5 m - 7 m.

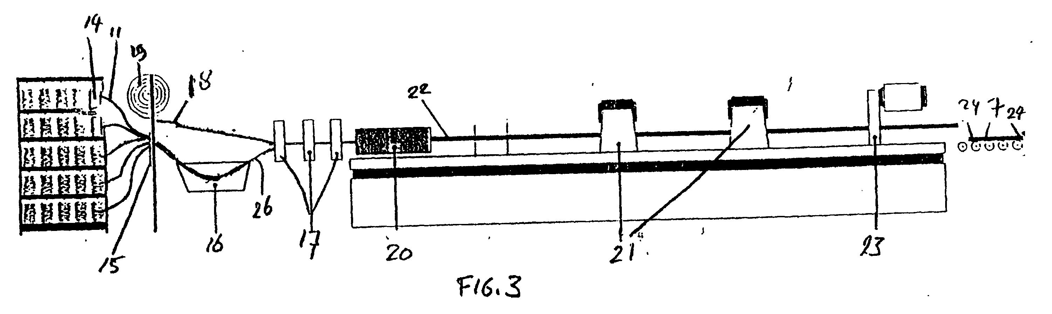

Referring to fig. 3, a preferred process is shown in which the linking pin 7 depicted in fig. 2 can be produced. The preferred production process is a variant of the pultrusion process and is known perse. The described process is not part of the invention. In the following, a rough outline of the process is given with the sole purpose of providing a basic understanding thereof.

A number of glass fibres 11 are pulled from supply rolls 14 on which they are wound individually and are fed through a tensioning matrix 15. A strand 26 of parallel, continuous fibres 11 coming out of the tension matrix 15 is subsequently pulled through a bath 16 comprising vinylester resin which bonds the fibres 11. The fibres 11 subsequently pass a number of guiding plates 17 together with a strip 18 of polyester that is supplied from a roll 19. The guiding plates 17 serve to fold the strip 18 around the strand 26 of resin-coated fibres 11, such that the strand 26 of resin-coated fibres 11 forms an inner portion 12 and the strip 18 forms an outer layer 13 of a rod 22 to be formed. The strand 26 and the strip 18 pass through a heated die 20. In the die 20 the rod 22 is formed. It is during this stage that the vinylester material of the inner portion 12 integrates with the material of the outer layer 13. The rod 22 is pulled on by translating grippers 21, such that the fibres 11 and the strip 18 are fed from their respective rolls 14, 19. The rod 22 is subsequently cut into segments of desired length using a saw 23, preferably a diamond saw.

The cut segments can, according to the invention, be used as linking pins 7. It is also possible to provide the end portions 24 of the linking pins 7 with a coating e.g. by dipping the end 24 portions in a bath of resin.

The advantage of using this process is that a wear-resistant outer layer 13 is formed of which the radial dimension is relatively small, e.g. approximately 0.2 mm. This way, it is possible to manufacture a linking pin 7 with a relatively large inner portion 12, thus improving the toughness of the linking pin 7. Furthermore, the material of the outer layer 13 is integrated with the material of the. inner portion 12, which greatly improves wear-resistance of the linking pin 7.

It is also possible to manufacture the linking pin 7 according to the invention in other ways, e.g. by a combined process of pultruding the inner portion 12 and subsequently extruding the outer layer 13 around the inner portion 12. The outer layer 13 can also be formed by shrinking a sleeve of thermoplastic material around the inner portion 12 or by filling the cavity of a tube with fibres, with or without resin.

It should be noted that the invention is not limited to the embodiments described above, and that many variations are possible within the scope of the invention as claimed.

The reinforcing fibres do e.g. not necessarily have to be present in the centre of the linking pin and/or the wear-resistant outer layer does not necessarily have to be in direct contact with the reinforcing fibres. Embodiments of a modular conveyor belt with a linking pin comprising a hollow of fibreless core located within the inner portion of the linking pin and/or comprising an intermediate layer in which no fibres 11 are present, are therefore possible within the scope of the invention as claimed.

## Claims

1. A modular conveyor belt (1), comprising a transport surface defined by a number of modules (2) that are aligned in a direction of transportation (3) and that extend transversely with respect to said direction, which modules (2) are each provided with at least one outwardly extending knuckle (4) on a leading (5) and a trailing portion (6) thereof, in which modular conveyor belt (1) the knuckles (4) of consecutive modules (2) are pivotally linked by means of linking pins (7) extending through said knuckles (4),
**characterised in that** at least one of said linking pins (7) comprises reinforcing fibres (11) extending at least substantially along the length of said linking pin (7), which reinforcing fibres (11) are located in an inner portion (12) of said linking pin (7), which inner portion (12) is surrounded by a wear-resistant outer layer (13), covering said reinforcing fibres (11).

2. A modular conveyor belt (1) according to claim 1, **characterised in that** said reinforcing fibres (11) comprise glass fibres.

3. A modular conveyor belt (1) according to claim 1 or 2, **characterised in that** that the material of said inner portion (12) is integrated with the material of said outer layer (13).

4. A modular conveyor belt (1) according to any of claims 1-3, **characterised in that** the radial dimension of said outer layer (13) is less than 1.0 mm, preferably less than 0.5 mm, in particular approximately 0.2 mm.

5. A modular conveyor belt (1) according to any of claims 1-4, **characterised in that** the diameter of said linking pin (7) is less than 15 mm, preferably less than 10 mm, in particular approximately 4 mm.

6. A modular conveyor belt (1) according to any of claims 1-5, **characterised in that** said outer layer (13) comprises polyester.

7. A modular conveyor belt (1) according to any of claims 1-6, **characterised in that** said inner portion (12) comprises a vinylester support structure (25) in which said fibres (11) are bonded.

8. A modular conveyor belt (1) according to any of claims 1-7, **characterised in that** said fibres (11) extend parallel in a longitudinal direction throughout the length of said linking pin (7).

9. A linking pin (7) for pivotally linking the consecutive modules (2) of a modular conveyor belt (1), comprising a substantially longitudinal member, **characterised in that** said linking pin (7) comprises reinforcing fibres (11) extending at least substantially along the length of said member, which reinforcing fibres (11) are located in an inner portion (12) of said member, which inner portion (12) is surrounded by a wear-resistant outer layer (13), covering said reinforcing fibres (11).

10. A linking pin (7) according to claim 9, **characterised in that** said reinforcing fibres (11) comprise glass fibres.

## Patentansprüche

1. Modulares Förderband (1) mit einer Transportfläche, die durch eine Anzahl von Modulen (2) gebildet ist, die in einer Transportrichtung (3) ausgerichtet sind und sich zu dieser Richtung transversal erstrecken, wobei die Module (2) an einem vorderen (5) und einem hinteren Bereich (6) jeweils mit wenigstens einem nach außen ragenden Ansatz (4) versehen sind, wobei bei dem modularen Förderband (1) die Ansätze (4) aufeinanderfolgender Module (2) schwenkbar durch sich durch die Ansätze (4) erstreckende Verbindungsstifte (7) verbunden sind, **dadurch gekennzeichnet, daß** wenigstens einer der Verbindungsstifte (7) Verstärkungsfasern (11) aufweist, die sich wenigstens im wesentlichen entlang der Länge des Verbindungsstifts (7) erstrecken, wobei die Verstärkungsfasern (11) in einem Innenbereich (12) des Verbindungsstifts (7) angeordnet sind, wobei der Innenbereich (12) von einer verschleißfesten Außenschicht (13) umgeben ist, welche die Verstärkungsfasern (11) bedeckt.

2. Modulares Förderband (1) nach Anspruch 1, **dadurch gekennzeichnet, daß** die Verstärkungsfasern (11) Glasfasern aufweisen.

3. Modulares Förderband (1) nach Anspruch 1 oder, **dadurch gekennzeichnet, daß** das Material des Innenbereichs (11) in das Material der Außenschicht (13) integriert ist.

4. Modulares Förderband (1) nach einem der Ansprüche 1-3, **dadurch gekennzeichnet, daß** die radiale Abmessung der Außenschicht (13) weniger als 1,0 mm, vorzugsweise weniger als 0,5 mm, insbesondere ungefähr 0,2 mm, beträgt.

5. Modulares Förderband (1) nach einem der Ansprüche 1-4, **dadurch gekennzeichnet, daß** der Durchmesser des Verbindungsstifts (7) weniger als 15 mm, vorzugsweise weniger als 10 mm, insbesondere ungefähr 4 mm, beträgt.

6. Modulares Förderband (1) nach einem der Ansprüche 1-5, **dadurch gekennzeichnet, daß** die Außenschicht (13) Polyester aufweist.

7. Modulares Förderband (1) nach einem der Ansprüche 1-6, **dadurch gekennzeichnet, daß** der Innenbereich (12) eine Vinylester-Stützstruktur (15) aufweist, in dem die Fasern (11) verbondet sind.

8. Modulares Förderband (1) nach einem der Ansprüche 1-7, **dadurch gekennzeichnet, daß** sich die Fasern (11) parallel in Längsrichtung über die gesamte Länge des Verbindungsstifts (7) erstrecken.

9. Verbindungsstift (7) zum schwenkbaren Verbinden der aufeinanderfolgenden Module (2) eines modularen Förderbands (1), mit einem im wesentlichen längsgerichteten Teil, **dadurch gekennzeichnet, daß** der Verbindungsstift (7) Verstärkungsfasern (11) aufweist, die sich wenigstens im wesentlichen entlang der Länge des Teils erstrecken, wobei die Verstärkungsfasern (11) in einem Innenbereich (12) des Teils angeordnet sind, wobei der Innenbereich (12) von einer verschleißfesten Außenschicht (13) umgeben ist, welche die Verstärkungsfasern (11) bedeckt.

10. Verbindungsstift (7) nach Anspruch 9, **dadurch gekennzeichnet, daß** die Verstärkungsfasern (11) Glasfasern aufweisen.

## Revendications

1. Chaîne transporteuse modulaire (1), comprenant une surface de transport définie par un certain nombre de modules (2) qui sont alignés dans une direction de transport (3) et qui s'étendent transversalement en fonction de ladite direction, modules (2) qui sont chacun dotés d'au moins un charnon (4) s'étendant vers l'extérieur sur des parties frontales (5) et arrière (6) de celui-ci, chaîne transporteuse modulaire (1) dans laquelle les charnons (4) des modules consécutifs (2) sont reliés de façon pivotante au moyen d'axes de liaison (7) s'étendant à travers lesdits charnons (4), **caractérisée en ce qu'**au moins un desdits axes de liaison (7) comprend des fibres de renforcement (11) s'étendant au moins sensiblement sur la longueur dudit axe de liaison (7), fibres de renforcement (11) qui sont situées dans une partie interne (12) dudit axe de liaison (7), partie interne (12) qui est entourée d'une couche externe résistant à l'usure (13), recouvrant lesdites fibres de renforcement (11).

2. Chaîne transporteuse modulaire (1) selon la revendication 1, **caractérisée en ce que** lesdites fibres de renforcement (11) comprennent des fibres de verre.

3. Chaîne transporteuse modulaire (1) selon la revendication 1 ou 2, **caractérisée en ce que** la matière de ladite partie interne (12) est intégrée à la matière de ladite couche externe (13).

4. Chaîne transporteuse modulaire (1) selon l'une quelconque des revendications 1 à 3, **caractérisée en ce que** la dimension radiale de ladite couche externe (13) est inférieure à 1,0 mm, de préférence inférieure à 0,5 mm, en particulier approximativement à 0,2 mm.

5. Chaîne transporteuse modulaire (1) selon l'une quelconque des revendications 1 à 4, **caractérisée en ce que** le diamètre dudit axe de liaison (7) est inférieur à 15 mm, de préférence inférieur à 10 mm, en particulier approximativement à 4 mm.

6. Chaîne transporteuse modulaire (1) selon l'une quelconque des revendications 1 à 5, **caractérisée en ce que** ladite couche externe (13) comprend un polyester.

7. Chaîne transporteuse modulaire (1) selon l'une quelconque des revendications 1 à 6, **caractérisée en ce que** ladite partie interne (12) comprend une structure de support d'ester vinylique (25) dans laquelle lesdites fibres (11) sont liées.

8. Chaîne transporteuse modulaire (1) selon l'une quelconque des revendications 1 à 7, **caractérisée en ce que** lesdites fibres (11) s'étendent parallèlement dans une direction longitudinale sur la longueur dudit axe de liaison (7).

9. Axe de liaison (7) pour relier de façon pivotante les modules consécutifs (2) d'une chaîne transporteuse modulaire (1), comprenant un élément essentiellement longitudinal, **caractérisée en ce que** ledit axe de liaison (7) comprend des fibres de renforcement (11) s'étendant sensiblement au moins sur la longueur dudit élément, fibres de renforcement (11) qui sont situées dans une partie interne (12) dudit élément, partie interne (12) qui est entourée d'une couche externe résistant à l'usure (13), recouvrant lesdites fibres de renforcement (11).

10. Axe de liaison (7) selon la revendication 9, **caractérisée en ce que** lesdites fibres de renforcement (11) comprennent des fibres de verre.
